# EUROPEAN PATENT SPECIFICATION

(11) **EP 1 361 090 B1**
(45) Date of publication and mention of the grant of the patent: **01.06.2005**
(21) Application number: 03009129.2
(22) Date of filing: 22.04.2003
(51) Int. Cl.: B60H 1/24, B60P 3/04

(54) **A motor vehicle with a system for ventilation of a compartment that is able to house a domestic animal**
Kraftfahrzeug mit Innenraumbelüftungsystem das ein Haustier aufnehmen kann
Véhicule à moteur avec système de ventilation d'un compartiment capable de contenir un animal domestique

(30) Priority: 07.05.2002 IT TO20020374
(43) Date of publication of application: 12.11.2003
(73) Proprietor: C.R.F. Società Consortile per Azioni, 10043 Orbassano (Torino) (IT)
(72) Inventor: Perlo, Piero, 12048 Sommariva Bosco (Cuneo) (IT); Innocenti, Gianfranco, 10040 Rivalta (Torino) (IT); Grasso, Valentina, 10041 Carignano (Torino) (IT)
(74) Representative: Gallarotti, Franco

(56) References cited:
- FR-A- 1 464 149
- GB-A- 1 582 440
- US-A- 2 248 329
- US-A- 4 856 839

## Description

The present invention relates to a motor vehicle comprising a vehicle body, inside which there are defined a passenger compartment, designed to house one or more persons, and a rear loading compartment, which is able to house at least one domestic animal.

In recent times, there have been introduced solutions aimed at rendering more convenient and comfortable the transporting of domestic animals within the rear-loading compartment or boot of a motor vehicle, which is the area of the latter traditionally exploited for the purpose.

The solution most widely used consists in the provision of a separation grill, aimed at a separating in a secure way the passenger compartment of the motor vehicle, understood as the area housing the driver and the passengers, from the rear compartment, in which the animal is housed.

Other solutions envisage the use of anti-slip mats and/or protective mats, designed to be arranged in the boot of the motor vehicle, for improving the conditions of stability of the animal and for preventing, at the same time, deterioration of the motor vehicle itself.

Further solutions envisage systems for harnessing the animal, so as to guarantee the safety of the latter in the case of collisions, sudden jerks or swerving of the motor vehicle, and to prevent the animal from possibly disturbing the passengers, allowing it at the same time a certain degree of comfort and a certain degree of mobility.

The present invention is based, however, upon the recognition of the fact that the well-being of the animal is linked, above all, to the conditions of the air present in the compartment which houses it in the motor vehicle and to the fact that, in the present state of the art, there do not exist specific solutions in this direction.

The approach followed for the purpose of enabling change of air in the area in which the transported animal is located is typically that of partially opening of one or more rear windows of the motor vehicle. This practice, in addition to not being effective for the purposes of increase in comfort of the animal transported, may lead to a certain degree of disturbance for the occupants of the vehicle, in addition to a worsening in the conditions of the air also within the passenger compartment.

GB-B-1.582.440 discloses a vehicle having a boot that is separated from the passenger compartment. According to the cited document, such a kind of boot, when fitted with a conventional lid, cannot be used for transporting animals, because when the lid is closed the boot is unventilated. For this reasons, a lid is suggested, including at least one air inlet to enable fresh-air to enter the boot, as well as at least one air outlet, arranged so that the air inside the boot is continuously replaced by fresh-air from outside. The lid according to GB-B-1.582.440 is designed for being readily fixed to existing hinge points on the vehicle body, after the original conventional boot lid has been removed.

Similarly, in order to allow an animal to be transported in the boot of a vehicle being distinct from the passenger compartment, FR-B-1.464.149 proposes an aerating device consisting of a substantially tubular body, which is mounted vertically through the boot's bottom; the tubular body is divided by a vertical wall into a conduit for fresh air and a conduit for vitiated air; the conduit for fresh air has a lower inlet, open below the boot's bottom, and an upper outlet, open into the boot, whereas the conduit for vitiated air has an upper inlet open into the boot and a lower outlet, open below the boot's bottom.

The purpose of the present invention is to provide a motor vehicle in which the air conditions in the compartment equipped for transporting an animal will be improved by means of a relatively simple, functional, and low-cost system.

The above and other purposes are achieved, according to the present invention, by a motor vehicle having the characterizing features of claim 1.

Preferred embodiments of the invention are specified in the attached claims, which are understood as forming an integral part of the present description.

Further purposes, characteristics and advantages of the present invention will emerge clearly from the ensuing description with reference to the annexed drawings, which are provided purely by way of non-limiting example and in which:
- Figure **1** is a schematic plan view and in partial cross section of a generic motor vehicle built in accordance with a first embodiment of the present invention,
- Figure **2** is a schematic perspective view of the rear part of the motor vehicle of Figure 1;
- Figure **3** is a schematic plan view in partial cross section of a generic motor vehicle built in accordance with a second possible embodiment of the present invention; and
- Figure **4** is a schematic perspective view of the rear part of the motor vehicle of Figure 3.

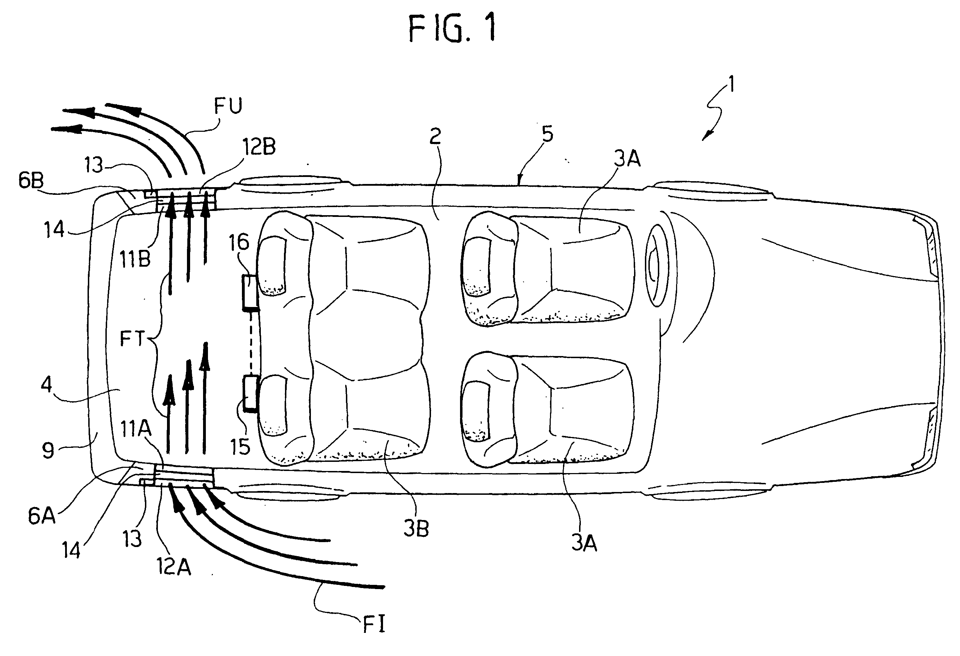

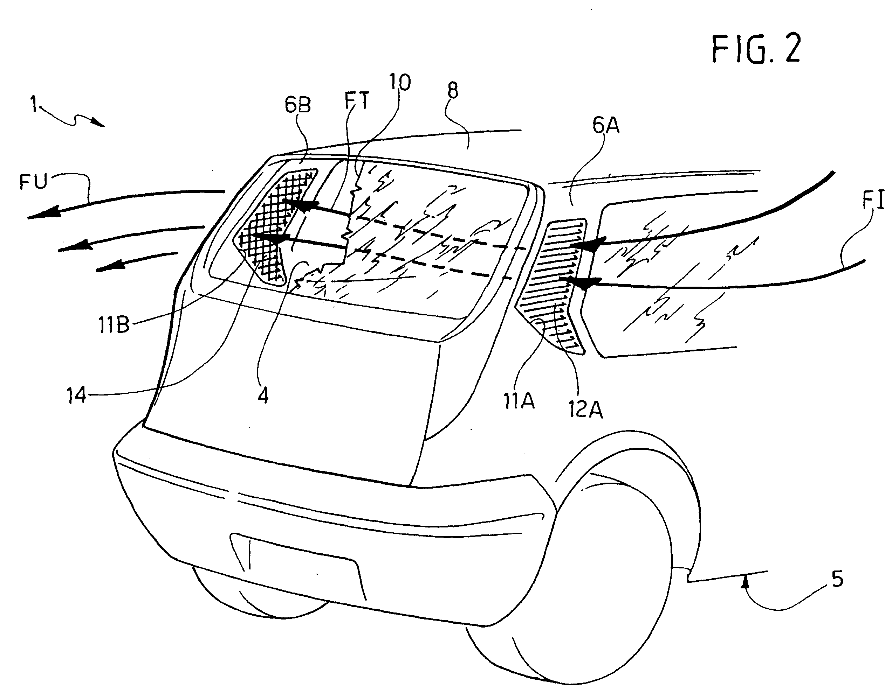

Figures 1 and 2 represent, with different views, a generic motor vehicle built in accordance with the present invention.

In the case provided by way of example, the motor vehicle is represented by a motor car, designated as a whole by 1, having a passenger compartment 2, within which are arranged two front seats 3A and a rear seat 3B; behind the seat 3 there is present a rear-loading compartment or boot 4.

The body 5 of the motor car 1 is designed in a way that is as a whole known and comprises for said purpose two rear uprights 6A and 6B for connection of the lower part of the bodywork to the roof of the motor car itself, designated by 8 in Figure 2.

The body 5 likewise comprises side doors (not shown in the figures) and a rear door 9, provided for enabling access to the boot 4. The rear door 9, which is equipped with a respective window designated by 10 in Figure 2, is hinged in a known way to the body 5, and in particular to its roof 8.

The motor car 1 likewise comprises all the elements, which are known to the art, for its operation, amongst which a system of ventilation or circulation of the air, comprising one or more passages which enable conveyance into the passenger compartment 2 of the air taken in from outside.

According to a first important aspect of the invention, in the body 5 of the motor car 1 there are defined at least two further passages, for inducing the formation of a flow of air which follows a preferential path within the boot 4. In the case provided by way of example, for this purpose two passages are envisaged, designated by 11A and 11B, each defined in a respective side upright 6A and 6B.

In a position corresponding to the external part of the passages 11A, 11B respective deflector members are installed, designated by 12A and 12B, comprising, for example, one or more mobile flaps or plates, which extend horizontally, as in the case represented in Figure 2, or else vertically.

The deflector members 12A, 12B are equipped for the purpose with a respective system of movement, designated as a whole by 13 in Figure 1, comprising actuator means made according to known technologies (for example, thermo-actuators, electromagnets, electric stepper motors or continuous electric motors, piezo-electric actuators or actuators made of shape-memory alloy, etc.).

Furthermore, possibly, between each deflector member 12A, 12B and the outlet of the respective passage 11A, 11B towards the inside of the boot 4, there may be provided filtering means, designated as a whole by 14 in Figures 1 and 2. The said filtering means 14 may be represented by a retention membrane, for example consisting of porous activated carbon with adsorbent action. The action of said filtering means 14 proves particularly useful in critical conditions of pollution (tunnels, traffic queues, etc.), with the possibility of enabling opening of the deflector members 12A, 12B also in the aforesaid conditions.

The system according to the invention is conceived for enabling circulation of air in the boot 4. For this purpose, in the case provided by way of example, the deflector member 12A set on the upright 6A is provided for enabling entrance of air, whilst the deflector member 12B set on the upright 6B is provided for enabling the subsequent outflow of the air. In this embodiment, the aerodynamic design of the system of air circulation thus envisages that the deflector member 12A is shaped for facilitating intake of the external air towards the inside of the boot 4, whilst the deflector 12B is shaped for favouring suction of the internal air from inside the boot 4, so as to cause it to flow outside the motor car 1.

Possibly, in accordance with a possible embodiment of the invention, there may likewise be provided sensor means or detecting means, designated as a whole by 15 in Figure 1, for detection of one or more environmental or physical parameters, such as the presence of an animal in the boot 4, the ambient temperature, the speed of the flows of circulating air, the presence of smells, the presence of rain, the presence of pollutants, etc., the said sensor means being made using technology in itself known.

Finally, designated as a whole by 16 is a system for electronic control of the system described, which may also be readily understood by a person skilled in the art, for acquisition of data from the aforesaid sensor means 15, if these are provided, and in any case for managing the actuator means 13, also as a result of manual commands, for the purposes of regulation of the operating position of the deflector members 12A and 12B.

The system of ventilation or circulation of the air in the boot 4 which equips the motor car 1 according to the invention functions in the way described in what follows.

For the purpose of enabling entrance of the air into the boot 4, the control system 16 operates the actuator means 13, with the consequent partial opening of the deflector members 12A and 12B. The air can then penetrate inside the motor car 1 by means of the passage 11A and the deflector member 12A, with inlet flows designated by FI.

The inlet flows FI then traverse the filtering means 14, for elimination of any possible pollutants, pollens and fumes, and reach the boot 4, in which a domestic animal, such as a dog, is assumed to be housed.

Given the special conformation and arrangement of the deflector members, the air follows a preferential path within the boot 4, between the inlet deflector member 12A and the outlet deflector member 12B, this path being represented by the flows designated by FT in Figures 1 and 2. The same air then flows off out of the boot 4 by means of the outlet deflector member 12B, giving rise to one of the outlet flows designated by FU.

The inlet flows FI are controlled by the deflector member 12A, the position of which is controlled by the actuator means 13. The latter are, as has been said, managed by the control system 16 following upon of a simple manual command issued by the driver or by a passenger of the motor car 1, or else on the basis of the environmental and dynamic conditions of the motor car 1, detected by the sensor means 15 (in this perspective, for example, the flow rate of air entering with the flows FI may be regulated by the system 16 in relation to the cruising speed of the motor car 1).

Note that, in the case where the filtering means 14 are not present, the control system 16 can be programmed for controlling the closing of the deflector members 12A, 12B according to detection effected by the sensor means 15. For example, in the case where there is provided a pollution sensor or external-temperature sensor and the value of pollution or temperature detected by the sensor exceeds a pre-determined threshold, the system 16 will automatically control closing of the deflector members 12A, 12B. Alternatively, once again in the absence of the filtering means 14, the closing of the deflector members could be associated to the shutting-off of the air circulation inside the passenger compartment 2.

As may be understood, the ventilation or circulation system described enables setting-up of an independent microclimate in the compartment designed for housing the animal, i.e., in the boot 4, with an evident improvement of the conditions of the air in terms of temperature, change, distribution and quality.

The system described thus proves evidently very useful for:
- creating a separation of the aerodynamic flows between the space 2 of the driver and of the passengers and the space 4 where the animal is housed;
- improving the conditions of respiration and of general well-being of the animal;
- aiding the elimination of unpleasant smells from the compartment 4 for housing the animal and improving as a whole the quality of the air inside the passenger compartment 2.

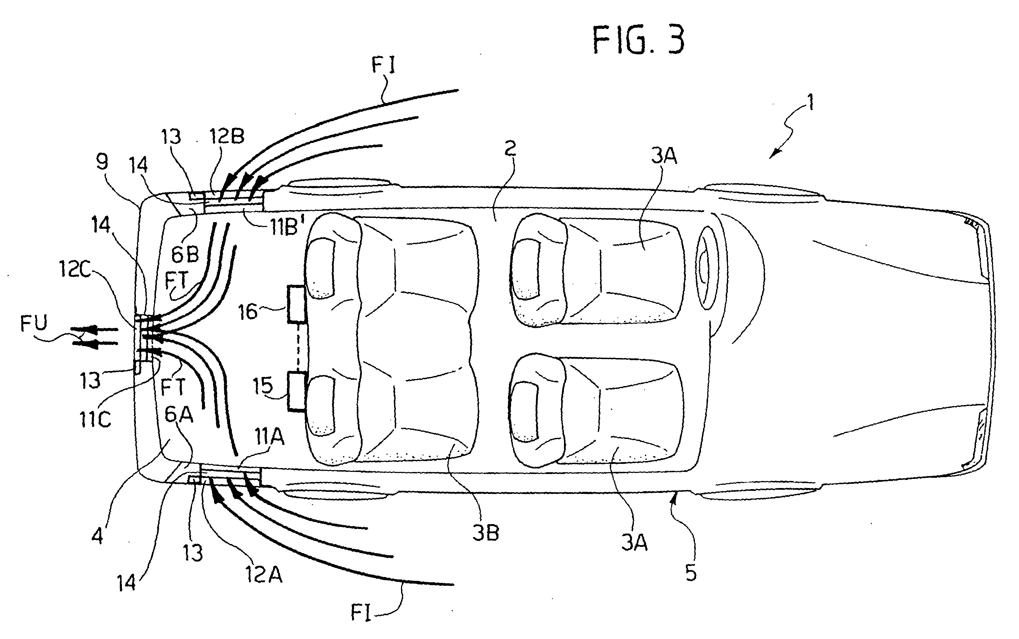

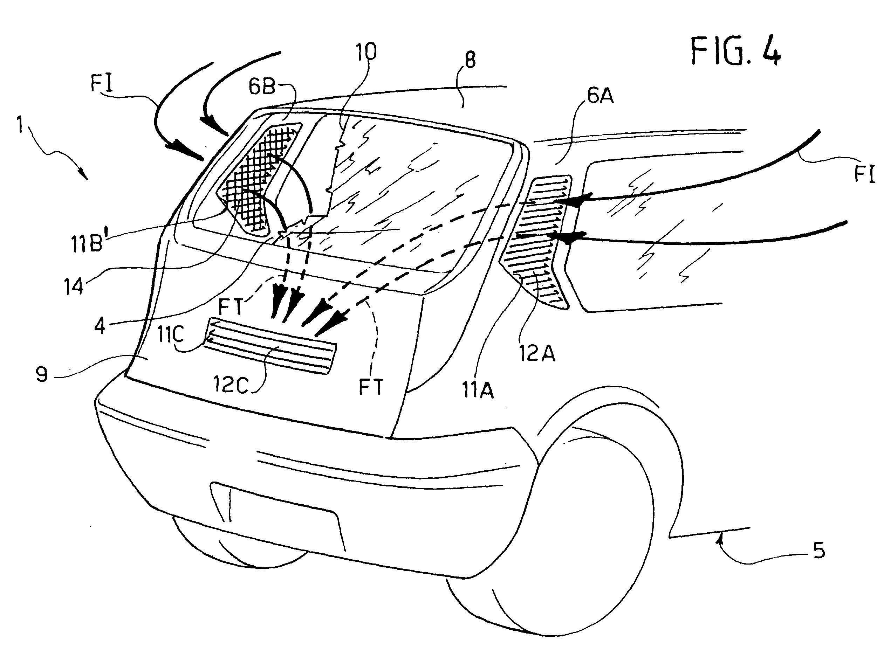

Figures 3 and 4 represent a possible alternative embodiment of the invention.

In the variant proposed, both of the passages 11A, 11B' and the respective deflector members 12A and 12B are shaped and provided for favouring the entrance of air into the boot 4, by means of respective inlet flows FI. The outflow of the air from the boot 4 is, instead, enabled by means of a further deflector member, designated by 12C, substantially of the same type as the ones designated by 12A and 12B, installed in a respective passage 11C defined in the rear access door 9.

Also in this case, the deflector member 12C may comprise a series of mobile horizontal plates, as in the case represented, or mobile vertical plates, with a respective system of movement 13, managed by the control system 16.

In the case of the embodiment illustrated in Figures 3 and 4, the inlet flows FI form, within the boot 4, a current of air FT having a preferential path, directed towards the bottom part of the rear access door 9, in the outlet deflector member 12C, through which the air then flows away outside the motor car 1.

This arrangement thus enables outflow of the air from the side portions towards the rear side of the boot 4, not only for the purpose of supplying fresh and clean air to the animal, but also to enable the collection and subsequent elimination of any hairs and dust in an area that is readily accessible for the purposes of cleaning.

Of course, without prejudice to the principle of the invention, the details of construction and the embodiments may vary with respect to what is described and illustrated herein purely by way of example.

For instance, it is clear that the passages 11A and/or 11B' for entrance into and/or outlet of the air from the rear compartment 4 could be made also in parts of the body or bodywork different from the rear uprights 6A, 6B, for instance on the sides of the motor vehicle 1.

The deflector members 12A, 12B and 12C, instead of comprising respective actuators of movement, could comprise active plates made of shape-memory alloy. As is known, shape-memory materials exploit the properties of some alloys of nickel and titanium, which undergo a contraction following upon heating up to a transition temperature.

Deflector members built in this way, in addition to requiring a very low power of supply and being extremely reliable and efficient, enable containment of the overall dimensions and weights of the system, so simplifying its constructional layout. The use of shape-memory materials for the fabrication of deflector members proves moreover of particular interest in the case of brief stops where the motor car 1 is standing still in the sun, with the engine turned off or when the user has forgotten to activate the control system for controlling the climate of the rear compartment 4. In this situation, the deflector members are in any case able to operate without the need for electric power, in so far as the partial opening thereof would be caused directly by the variation of the ambient temperature.

## Claims

1. A motor vehicle comprising a vehicle body (5), inside which there is defined a compartment including
- a passenger space (2), designed to house one or more persons, and
- a rear loading space (4), extending behind said passenger space (2) and which is able to house at least one domestic animal,
wherein a plurality of sides of the loading space (4) is delimited by the vehicle body (5), whereby in a first side of said plurality there is defined at least one inlet passage (11A; 11B') for conveyance of air from outside the motor vehicle (1) to the loading space (4) and in a second side of said plurality there is defined at least one outlet passage (11B; 11C) for expulsion of air from the loading space (4) outside the motor vehicle (1), **characterized in that** the outlet end of the first passage (11A; 11B') and the inlet end of the second passage (11B; 11C) are set in respective positions such as to induce therebetween formation of a flow or current of air (FT), which passes across the loading space (4) according to a substantially pre-defined or preferential path.

2. The motor vehicle according to Claim 1, **characterized in that** operatively associated to the inlet passage (11A; 11B'), and preferably also to the outlet passage (11B, 11C), is a respective deflector member (12A, 12B; 12A, 12B, 12C).

3. The motor vehicle according to Claim 2, **characterized in that** the deflector member (12A, 12B; 12A, 12B, 12C) comprises a respective system of movement (13).

4. The motor vehicle according to Claim 3, **characterized in that** the deflector member (12A, 12B; 12A, 12B, 12C) comprises one or more flaps or plates moved by means of the system of movement (13).

5. The motor vehicle according to Claim 2, **characterized in that** between at least one deflector member (12A, 12B; 12A, 12B, 12C) and one end of the respective passage (11A, 11B; 11B' 11C) , which faces inside the loading space (4) filtering means (14) are provided.

6. The motor vehicle according to Claim 2, **characterized in that** the deflector member (12A; 12A, 12B) associated to the inlet passage (11A; 11B') is shaped for facilitating intake of the external air towards the inside of the loading space (4).

7. The motor vehicle according to Claim 2, **characterized in that** the deflector member (12B; 12C) associated to the outlet passage (11B; 11C) is shaped for favouring suction of the internal air into the loading space (4), so as to cause it to flow outside.

8. The motor vehicle according to Claim 2, **characterized in that** an electronic control system (16) is provided for governing the system of movement (13) of the deflector member (12A, 12B; 12A, 12B, 12C), which operates for the purposes of regulation of the operating position of the latter.

9. The motor vehicle according to Claim 8, **characterized in that** sensor means are operatively associated to the control system (16), (15) for the detection of one or more environmental or physical parameters.

10. The motor vehicle according to Claim 9, **characterized in that** the control system (16) is operative to manage the actuation of the system of movement (13) of at least one deflector member (12A, 12B; 12A, 12B, 12C) according to measurements effected by means of the sensor means (15).

11. The motor vehicle according to Claim 1, **characterized in that** the inlet passage (11A) and the outlet passage (11B) are each defined in a respective upright (6A, 6B) forming part of the vehicle body (5).

12. The motor vehicle according to Claim 1, **characterized in that** the inlet passage (11A, 11B') is defined in a respective upright (6A, 6B) forming part of the vehicle body (5) and **in that** the outlet passage (11C) is defined within a rear access door (9) for access to the loading space (4), in particular in a bottom central portion of this rear door (9).

13. The motor vehicle according to Claim 12, **characterized in that** there are provided two inlet passages (11A, 11B'), each defined in a respective rear upright (6A, 6B) forming part of the vehicle body (5).

14. The motor vehicle according to Claim 1, **characterized in that** the inlet passage and outlet passage are each defined in a respective side of the vehicle body (5).

15. The motor vehicle according to Claim 12, **characterized in that** there are provided two inlet passages, each defined in a respective side of the vehicle body (5).

16. The motor vehicle according to Claim 4, **characterized in that** the flap or flaps of the deflector member (12A,12B; 12A, 12B, 12C) are made of shape-memory alloy.

## Patentansprüche

1. Kraftfahrzeug mit einem Fahrzeugkörper (5), im Inneren dessen ein Raum begrenzt ist, der
einen Fahrgastplatz (2), der dafür vorgesehen ist, eine oder mehr Personen aufzunehmen, und
einen hinteren Ladeplatz (4) aufweist, der sich hinter dem Fahrgastplatz (2) erstreckt, und der zumindest ein Haustier aufnehmen kann,
wobei eine Vielzahl der Seiten des Ladeplatzes (4) durch den Fahrzeugkörper (5) abgegrenzt wird, wodurch in einer ersten Seite der Vielzahl zumindest ein Einlassdurchgang (11A; 11B') zur Zufuhr von Luft von außerhalb des Kraftfahrzeugs (1) zu dem Ladeplatz (4) begrenzt ist, und in einer zweiten Seite der Vielzahl zumindest ein Auslassdurchgang (11B; 11C) zur Ausstoßung von Luft aus dem Ladeplatz (4) außerhalb des Kraftfahrzeugs (1) begrenzt ist,
**dadurch gekennzeichnet, dass** das Auslassende des ersten Durchgangs (11A; 11B') und das Einlassende des zweiten Durchgangs (11B; 11C) in entsprechenden Positionen derart angeordnet sind, dass dazwischen die Bildung eines Flusses oder Stroms von Luft (FT) induziiert wird, der durch den Ladeplatz (4) gemäß einem im Wesentlichen vorbestimmten oder bevorzugten Pfad passiert.

2. Kraftfahrzeug nach Anspruch 1, **dadurch gekennzeichnet, dass** mit dem Einlassdurchgang (11A; 11B'), und vorzugsweise auch mit dem Auslassdurchgang (11B; 11C), ein entsprechendes Ablenkelement (12A, 12B; 12A, 12B, 12C) betriebsbereit verbunden ist.

3. Kraftfahrzeug nach Anspruch 2, **dadurch gekennzeichnet, dass** das Ablenkelement (12A, 12B; 12A, 12B, 12C) ein entsprechendes Bewegungssystem (13) aufweist.

4. Kraftfahrzeug nach Anspruch 3, **dadurch gekennzeichnet, dass** das Ablenkelement (12A, 12B; 12A, 12B, 12C) eine oder mehr Klappen oder Platten aufweist, die mittels des Bewegungssystems (13) bewegt werden.

5. Kraftfahrzeug nach Anspruch 2, **dadurch gekennzeichnet, dass** zwischen zumindest einem Ablenkelement (12A, 12B; 12A, 12B, 12C) und einem Ende des entsprechenden Durchgangs (11A, 11B; 11B', 11C), das dem Inneren des Ladeplatzes (4) zugewandt ist, Filtereinrichtungen (14) vorgesehen sind.

6. Kraftfahrzeug nach Anspruch 2, **dadurch gekennzeichnet, dass** das Ablenkelement (12A; 12A, 12B), das mit dem Einlassdurchgang (11A; 11B') verbunden ist, zur Erleichterung des Eintritts der Außenluft zu dem Inneren des Ladeplatzes (4) geformt ist.

7. Kraftfahrzeug nach Anspruch 2, **dadurch gekennzeichnet, dass** das Ablenkelement (12B; 12C), das mit dem Auslassdurchgang (11B; 11C) verbunden ist, zur Begünstigung des Saugens der Innenluft in den Ladeplatz (4) geformt ist, um zu bewirken, dass sie nach außen fließt.

8. Kraftfahrzeug nach Anspruch 2, **dadurch gekennzeichnet, dass** ein elektronisches Steuerungssystem (16) zum Steuern des Bewegungssystems (13) des Ablenkelements (12A, 12B; 12A, 12B, 12C) vorgesehen ist, welches zum Zweck der Verstellung der Betriebsposition des letzteren betrieben wird.

9. Kraftfahrzeug nach Anspruch 8, **dadurch gekennzeichnet, dass** die Sensoreinrichtungen (15) betriebsbereit mit dem Steuerungssystem (16) verbunden sind, zur Erfassung von einem oder mehr Umwelt- oder physikalischen Parametern.

10. Kraftfahrzeug nach Anspruch 9, **dadurch gekennzeichnet, dass** das Steuerungssystem (16) betriebsbereit ist, die Betätigung des Bewegungssystems (13) von zumindest einem Ablenkelement (12A, 12B; 12A, 12B, 12C) gemäß Messungen zu führen, die mittels der Sensoreinrichtungen (15) ausgeführt werden.

11. Kraftfahrzeug nach Anspruch 1, **dadurch gekennzeichnet, dass** der Einlassdurchgang (11A) und der Auslassdurchgang (11B) jeder in einer jeweiligen Säule (6A, 6B) begrenzt sind, die einen Teil des Fahrzeugkörpers (5) bildet.

12. Kraftfahrzeug nach Anspruch 1, **dadurch gekennzeichnet, dass** der Einlassdurchgang (11A, 11B') in einer entsprechenden Säule (6A, 6B) begrenzt ist, die einen Teil des Fahrzeugkörpers (5) bildet, und dadurch, dass der Auslassdurchgang (11C) innerhalb einer Rückwandzugangstür (9) zum Zugang zu dem Ladeplatz (4) begrenzt ist, insbesondere in einem unteren Mittelabschnitt dieser Rückwandtür (9).

13. Kraftfahrzeug nach Anspruch 12, **dadurch gekennzeichnet, dass** das zwei Einlassdurchgänge (11A, 11B') vorgesehen sind, wobei jeder in einer jeweiligen hinteren Säule (6A, 6B) begrenzt ist, die einen Teil des Fahrzeugkörpers (5) bildet.

14. Kraftfahrzeug nach Anspruch 1, **dadurch gekennzeichnet, dass** der Einlassdurchgang und der Auslassdurchgang jeder in einer jeweiligen Seite des Fahrzeugkörpers (5) begrenzt sind.

15. Kraftfahrzeug nach Anspruch 12, **dadurch gekennzeichnet, dass** das zwei Einlassdurchgänge vorgesehen sind, wobei jeder in einer jeweiligen Seite des Fahrzeugkörpers (5) begrenzt ist.

16. Kraftfahrzeug nach Anspruch 4, **dadurch gekennzeichnet, dass** die Klappe oder Klappen des Ablenkelements (12A, 12B; 12A, 12B, 12C) aus einer Formgedächtnislegierung ausgeführt werden.

## Revendications

1. Véhicule à moteur comprenant une carrosserie de véhicule (5), à l'intérieur de laquelle un compartiment est défini comprenant :
- un espace pour passagers (2), conçu pour loger une ou plusieurs personnes, et
- un espace de chargement (4) arrière, s'étendant derrière ledit espace pour passagers (2) et qui est capable de loger au moins un animal domestique,
dans lequel une pluralité de côtés de l'espace de chargement (4) sont délimités par la carrosserie de véhicule (5),
moyennant quoi, dans un première côté de ladite pluralité, au moins un passage d'admission (11A ; 11B') est défini pour le transport d'air de l'extérieur du véhicule à moteur (1) vers l'espace de chargement (4) et, dans un deuxième côté de ladite pluralité, au moins un passage d'échappement (11B; 11C) est défini pour expulser de l'air de l'espace de chargement (4) vers l'extérieur du véhicule à moteur (1), **caractérisé en ce que** l'extrémité d'échappement du premier passage (11A; 11B') et l'extrémité d'admission du deuxième passage (11B; 11C) sont positionnées à des positions respectives de manière à induire entre elles la formation d'une circulation ou d'un courant d'air (FT), qui traverse l'espace de chargement (4) selon un trajet sensiblement prédéfini ou préférentiel.

2. Véhicule à moteur selon la revendication 1, **caractérisé en ce qu'**un élément déflecteur (12A, 12B; 12A, 12B, 12C) respectif est associé de manière opérationnelle au passage d'admission (11A; 11B') et, de préférence, également au passage d'échappement (11B ; 11C).

3. Véhicule à moteur selon la revendication 2, **caractérisé en ce que** l'élément déflecteur (12A, 12B; 12A, 12B, 12C) comprend un système de mouvement (13) respectif.

4. Véhicule à moteur selon la revendication 3, **caractérisé en ce que** l'élément déflecteur (12A, 12B; 12A, 12B, 12C) comprend une ou plusieurs lames ou plaques déplacées au moyen du système de mouvement (13).

5. Véhicule à moteur selon la revendication 2, **caractérisé en ce que**, entre au moins un élément déflecteur (12A, 12B; 12A, 12B, 12C) et une extrémité du passage (11A, 11B ; 11B', 11C) respectif, qui est orientée vers l'intérieur de l'espace de chargement (4), des moyens de filtrage (14) sont prévus.

6. Véhicule à moteur selon la revendication 2, **caractérisé en ce que** l'élément déflecteur (12A; 12A, 12B) associé au passage d'admission (11A; 11B') est formé pour faciliter l'admission de l'air externe vers l'intérieur de l'espace de chargement (4).

7. Véhicule à moteur selon la revendication 2, **caractérisé en ce que** l'élément déflecteur (12B; 12C) associé au passage d'échappement (11B; 11C) est formé pour favoriser l'aspiration de l'air interne dans l'espace de chargement (4) de manière à provoquer sont écoulement à l'extérieur.

8. Véhicule à moteur selon la revendication 2, **caractérisé en ce qu'**un système de commande électronique (16) est prévu pour diriger le système de mouvement (13) de l'élément déflecteur (12A, 12B; 12A, 12B, 12C) qui fonctionne en vue de réguler la position de fonctionnement de ce dernier.

9. Véhicule à moteur selon la revendication 8, **caractérisé en ce que** des moyens formant capteur sont associés de manière opérationnelle au système de commande (16), (15) pour la détection d'un ou de plusieurs paramètres environnementaux ou physiques.

10. Véhicule à moteur selon la revendication 9, **caractérisé en ce que** le système de commande (16) est opérationnel pour gérer l'actionnement du système de mouvement (13) d'au moins un élément déflecteur (12A, 12B; 12A, 12B, 12C) conformément à des mesures effectuées à l'aide des moyens formant capteur (15).

11. Véhicule à moteur selon la revendication 1, **caractérisé en ce que** le passage d'admission (11A) et le passage d'échappement (11B) sont définis chacun dans un montant (6A, 6B) respectif faisant partie de la carrosserie de véhicule (5).

12. Véhicule à moteur selon la revendication 1, **caractérisé en ce que** le passage d'admission (11A, 11B') est défini dans un montant (6A, 6B) respectif faisant partie de la carrosserie de véhicule (5), et **en ce que** le passage d'échappement (11C) est défini dans une portière arrière d'accès (9) pour accéder à l'espace de chargement (4), en particulier dans une partie de fond centrale de cette portière arrière (9).

13. Véhicule à moteur selon la revendication 12, **caractérisé en ce que** deux passages d'admission (11A, 11B') sont prévus, définis chacun dans un montant (6A, 6B) arrière respectif faisant partie de la carrosserie de véhicule (5).

14. Véhicule à moteur selon la revendication 1, **caractérisé en ce que** le passage d'admission et le passage d'échappement sont définis chacun dans un côté respectif de la carrosserie de véhicule (5).

15. Véhicule à moteur selon la revendication 12, **caractérisé en ce que** deux passages d'admission sont prévus, définis chacun dans un côté respectif de la carrosserie de véhicule (5).

16. Véhicule à moteur selon la revendication 4, **caractérisé en ce que** la lame ou les lames de l'élément déflecteur (12A, 12B; 12A, 12B, 12C) sont réalisées en un alliage à mémoire de forme.
